# EUROPEAN PATENT APPLICATION

(11) **EP 3 115 186 A1**
(43) Date of publication of application: **11.01.2017**
(21) Application number: 16178710.6
(22) Date of filing: 08.07.2016
(51) Int. Cl.: B29C 70/86, B29C 70/52, B29C 70/22, F16C 3/02, B29D 99/00, B32B 1/08, B32B 5/26, B29C 53/56, B29D 23/00, F16L 9/12

(54) **TUBULAR, PULTRUDED COMPOSITE PIECE**

(30) Priority: 09.07.2015 FI 20155545
(71) Applicant: Exel Composites OYJ, 01510 Vantaa (FI)
(72) Inventor: HONKANEN, Juha, 82120 Joensuu (FI); JAATINEN, Pauli, 52710 Mäntyharju (FI)
(74) Representative: Boco IP Oy Ab

(57) **Abstract**

Composite constructions, whereby the vibration damping capacity of a tubular piece of composite construction comprising carbon fibre can be improved. The composite construction comprises at least two sections of longitudinal fibres and at least two sections of oriented fibres, the first section of longitudinal fibres forming the inner surface of the tubular piece, the first section of oriented fibres being arranged between the first section of longitudinal fibres and the second section of longitudinal fibres, the second section of longitudinal fibres being arranged between the first section of oriented fibres and the second section of oriented fibres, and the second section of oriented fibres forming the outer surface of the tubular piece, wherein the fibres of said first oriented section, the fibres of the second longitudinal section, or both, comprise synthetic fibre, natural fibre, or both.

## Description

### Field of the Invention

The present invention relates to composite constructions for tubular pieces. In particular, the present invention refers to a composite construction by means of which the vibration damping capacity in a tubular piece of composite construction comprising carbon fibre can be improved.

### State of the Art

Conventionally, composite constructions comprising carbon fibre have been used in structures in which one simultaneously requires both light weight and strength. In particular, composite tubes containing carbon fibre have been used for providing light and stiff structures.

A problem has arisen in certain application objects, particularly in elongated carbon fibre tubes, in achieving sufficient vibration damping. The problem is particularly pronounced when thin-walled tubes are used and in telescopic tube structures.

### Objectives of the Invention and Summary

An object of the present invention is to provide a composite construction for a tubular piece by means of which composite construction improvement of the vibration damping capacity of the tubular piece can be achieved. Additionally, an object of the present invention is to provide a tubular piece of composite construction and a method for manufacturing such a tubular piece of composite construction.

The composite construction according to the present invention is characterized by what is stated in the characterizing part of the attached independent claim 1. Features of various embodiments of the composite construction according to the invention are disclosed in the attached dependent claims 2 to 10.

The tube of composite construction according to the present invention is characterized in what is stated in claim 11.

Correspondingly, the method according to the present invention for manufacturing a tubular piece of composite construction is characterized in what is stated in the characterizing part of the attached independent claim 12. Various embodiments of the method according to the invention for manufacturing a tubular piece of composite construction are disclosed in the dependent claims 13 to 21.

The obectives according to the invention have been achieved by using synthetic fibre or natural fibre in addition to carbon fibre, preferably in a first oriented section, in a second longitudinal section, or in both. Using natural fibres or synthetic fibres in addition to carbon fibre has been observed to improve the vibration damping capacity of the composite construction comprising carbon fibre. By using natural fibres or synthetic fibres in addition to carbon fibre, the weight of the composite construction can also be made lighter still, making possible the production of structures lighter and stiffer than normal all carbon fibre structures.

The composite construction for a tubular piece, according to the present invention, is particularly well suited for use in structures, where both light weight and good vibration damping capacity are required of an elongated tubular piece. Non-restricting examples of such applications are for instance the structures of various devices, imaging and measuring devices as well as tool structures, particularly their arm-like structures. Other preferable applications for a composite construction according to the present invention are various tripod and arm structures for supporting for instance imaging devices, measuring devices and tools. In addition, the present tubular piece is observed to suit particularly well for telescopic structures that are to be longitudinally extendable. The composite construction according to the invention for tubular pieces can also be utilized, for example, in industrial measuring jigs and in sports equipment, such as bicycle parts.

### Detailed Description of the Invention

In connection with this patent application, the meaning of the term composite construction is a construction comprising reinforcing fibres and matrix material.

In connection with this patent application, the meaning of the term tubular piece is an elongated object delimiting in itself a closed profile. The tubular piece can have a round cross-section, preferably of circular shape. Naturally, other cross-sections can also be the case. Moreover, in connection with this patent application, the meaning of the term the longitudinal direction of the tubular piece is the direction in which fibres are pulled through a nozzle.

The composite construction for a tubular piece, according to the invention, comprises matrix material and reinforcing fibres, at least part of which comprise carbon fibre. The composite construction according to the invention is divided into sections in the direction of the thickness of the wall of the tubular piece.

A construction divided into sections in the direction of the thickness of the wall is accomplished by, for example, pultrusion, wherein different fibres are pulled on top of each other in various steps of the manufacturing process. In the pultrusion process, the fibres are impregnated with the desired matrix material. Non-restricting examples of matrix materials that can be used in connection with the invention are, for instance, thermosetting plastics, such as epoxy based resins, polyurethane based resins, and vinyl ester based resins. The epoxy based resins are best suited for use in applications, where maximal strength is desired for the composite construction. On the other hand, the vinyl ester based resins are best suited for use in applications, where it is desirable to maximize the environmental and chemical resistance of the composite construction. Polyurethane based resins generally have high ultimate tensile strength, and thus good impact resistance and fatigue stress characteristics. Thermoplastic plastic, such as, for instance, polyamide can also be used as the matrix material.

Finally, the impregnated fibres are pulled through a nozzle defining the final cross-section shape of the piece, in which nozzle the matrix material simultaneously is being hardened. Impregnation can be done, for example, by dipping the fibres in the matrix material, by spraying, or by introducing the matrix material just in the nozzle. Naturally, other alternative methods for impregnating the fibres can be considered.

The composite construction according to the present invention comprises a first section of longitudinal fibres, furthermore comprising essentially parallel continuous fibres arranged essentially longitudinally with respect to the tubular piece. Preferably the fibres of the first longitudinal section are carbon fibre.

The composite construction according to the invention moreover comprises a first section of oriented fibres, which furthermore comprises continuous fibres oriented at an angle with respect to the longitudinal direction of said tubular piece. The orientation of the fibres is achieved, for example, by winding the fibres about the longitudinal axis as the the fibres are being pulled through the nozzle. Pultrusion, wherein fibres are being wound in a oriented angle, is also known as pull-winding. The oreitnation angle can be adjusted in a desired manner by changing the speed of winding in relation to the speed by which fibres are being pulled through the nozzle.

Moreover, the composite construction according to the invention comprises a second section of longitudinal fibres comprising essentially parallel continuous fibres arranged essentially longitudinally with respect to the tubular piece. Preferably, the second longitudinal section comprises carbon fibre.

The composite construction according to the invention moreover comprises a second section of oriented fibres comprising essentially continuous fibres oriented at an angle with respect to the longitudinal direction of said tubular piece. Preferably, the second oriented section comprises carbon fibre.

The sections mentioned above are arranged in the composite construction according to the invention such, that the inner surface of the tubular piece is formed by the first section of longitudinal fibres. On the other hand, the first section of oriented fibres is arranged between the first section of longitudinal fibres and the second section of longitudinal fibres. Furthermore, the second section of longitudinal fibres is arranged between the first section of oriented fibres and the second section of oriented fibres. Thus, the outer surface of the tubular piece is formed by the second section of oriented fibres.

In particular, in the composite construction according to the invention, the fibres in said first oriented section, the fibres in the second longitudinal section, or both, comprise synthetic fibre, natural fibre, or both. Non-restricting examples of suitable fibres are, for example, flax fibres, hemp fibres, and jute fibres. Non-restricting examples of suitable synthetic fibres are, for example, polyester fibres such as PES and PET, aramid fibres, polyamide fibres, polyethene fibres such as Dyneema, and polypropene fibres such as Innegra.

The first longitudinal section, the second longitudinal section, or both, can comprise more than one separate layer of fibres. Then, in the longitudinal section, the fibres of separate adjacent layers on top of each other differ from each other. By this solution one can compensate for the lower rigidity of natural fibres or synthetic fibres than that of carbon fibre by arranging high modulus carbon fibres (HM) or ultra-high modulus carbon fibres (UHM) in at least one separate layer of the longitudinal section. Thus, one of the longitudinal sections, or both, may, for example, comprise more affordable ordinary types of carbon fibre, such as HS, HT, or HR carbon fibres, and high modulus or ultra-high modulus carbon fibre, in separate layers. The solution is less expensive in cost of materials than replacing all the carbon fibre to be used in the composite construction with high modulus or ultra-high modulus carbon fibre.

The first oriented section, the second oriented section, or both, can also comprise more than one separate layer of fibres. Then fibres of adjacent layers on top of each other in the oriented section in question are arranged oriented in at least two separate angles with respect to the longitudinal direction of said tubular piece. In practice, this can be accomplished by winding the fibres of the different layers of the oriented section using different pitch and/or by winding about the longitudinal axis in the opposite direction. Particularly preferably, said at least two separate angles are mutually opposite angles with respect to the longitudinal direction of said tubular piece, i.e. the fibres have been wound in opposite directions. Then, the mechanical attributes of the composite construction remain symmetrical. The fibres of the separate layers of the oriented sections may also comprise fibres that differ from each other.

The first oriented section, the second oriented section, or both, can also comprise fibres that are braided crossing each other. By braiding fibres, using the so called braiding technique, one gets fibres in mutually different angles with respect to the longitudinal direction in one manufacturing step. Crosswise braided fibres additionally run over and under one another forming a strong net of fibres.

In addition to being able to implement the first oriented section, the second oriented section, or both, as a crosswise braided section, a separate braided section of mutually crosswise braided essentially continuous fibres can be arranged around the first longitudinal section, the second longitudinal section, or both. The separate braided section around the longitudinal section binds the longitudinal fibres, i.e. stabilizes the drifting of the longitudinal fibres during the manufacturing process. This, again, improves the dimensional accuracy of the tube to be formed using the composite construction in question, and also facilitates the production of the composite construction.

Naturally, the fibres in the first section of oriented fibres can be oriented in any angle between 0° to 90° with respect to the longitudinal direction in order to achieve the desired mechanical attributes. Advantageously, the fibres in the first section of oriented fibres are preferably oriented in an angle of 10° to 90° with respect to the longitudinal direction of said tubular piece. The longitudinal vibration damping, in particular, has been observed to improve when the fibres in the first section of oriented fibres are oriented in an angle of preferably 10° to 40°, more preferably 15° to 35°, most preferably 20° to 30° with respect to the longitudinal direction. Correspondingly, the transversal vibration damping has been observed to improve when the fibres in the first section of oriented fibres are oriented in an angle of preferably 40° to 90°, more preferably 50° to 80°, most preferably 60° to 70° with respect to the longitudinal direction.

The fibres in the second section of oriented fibres can be oriented in any angle between 0° to 90° with respect to the longitudinal direction in order to achieve the desired mechanical attributes. However, an orientation angle of 5° to 60° with respect to the longitudinal direction has been observed to be particularly well suited for use in the composite construction according to the invention.

In the method according to the present invention, a tubular piece of composite construction is manufactured by means of a pultrusion process, said composite construction being divided into sections in the direction of the thickness of the tubular piece. The final tubular piece is provided by cutting the continuous composite construction accomplished by pultrusion to the desired length.

The method according to the invention comprises a step, wherein a first section of longitudinal fibres is being arranged by pulling substantially parallel continuous fibres essentially longitudinally with respect to the tubular piece.

The method according to the invention additionally comprises a step, wherein a first section of oriented fibres is being arranged by winding essentially continuous fibres in order to orient them at an angle with respect to the longitudinal direction of said tubular piece.

The method according to the invention additionally comprises a step, wherein a second section of longitudinal fibres is being arranged by pulling essentially parallel continuous fibres essentially longitudinally with respect to the tubular piece.

The method according to the invention furthermore comprises a step, wherein a second section of oriented fibres is being arranged by winding essentially continuous fibres in order to orient them at an angle with respect to the longitudinal direction of said tubular piece.

The steps presented above of the method according to the present invention are implemented such that the first section of longitudinal fibres forms the inner surface of the tubular piece. Additionally, the first section of oriented fibres is being arranged between the first section of longitudinal fibres and the second section of longitudinal fibres and the second section of longitudinal fibres is being arranged between the first section of oriented fibres and the second section of oriented fibres. Thus, the second section of oriented fibres forms the outer surface of the tubular piece.

In the method according to the present invention, the fibres in said first oriented section in particular, the fibres in the second longitudinal section, or both, comprise synthetic fibre, natural fibre, or both.

Arranging the first longitudinal section, the second longitudinal section, or both, can comprise arranging more than one separate layer of fibres, whereby the fibres of separate adjacent layers on top of each other in the longitudinal section differ from each other.

Arranging the first oriented section, the second oriented section, or both, can comprise arranging more than one separate layer of fibres, whereby the fibres of adjacent layers on top of each other in the oriented section are being arranged as oriented in at least two separate angles with respect to the longitudinal direction of said tubular piece. Preferably, the fibres of adjacent layers on top of each other in the oriented section are being arranged in mutually opposite angles with respect to the longitudinal direction of the tubular piece.

Arranging the first oriented section, the second oriented section, or both, can comprise braiding the essentially continuous fibres mutually crosswise.

The method according to the invention can furthermore comprise a step, wherein a separate braided section is being arranged around the first longitudinal section, the second longitudinal section, or both, whereby arranging said braided section comprises braiding essentially continuous fibres mutually crosswise.

Naturally, the fibres in the first section of oriented fibres can be arranged to be oriented in any angle between 0° to 90° with respect to the longitudinal direction in order to achieve the desired mechanical attributes. The fibres in the first section of oriented fibres are preferably being arranged to be oriented in an angle of 10° to 90° with respect to the longitudinal direction of said tubular piece. The longitudinal vibration damping in particular has been observed to improve when the fibres in the first section of oriented fibres are arranged to be oriented in an angle of preferably 10° to 40°, more preferably 15° to 35°, most preferably 20° to 30° with respect to the longitudinal direction. Correspondingly, the transversal vibration damping has been observed to improve when the fibres in the first section of oriented fibres are arranged to be oriented in an angle of preferably 40° to 90°, more preferably 50° to 80°, most preferably 60° to 70° with respect to the longitudinal direction.

The fibres in the second section of oriented fibres can also be arranged to be oriented in any angle between 0° to 90° with respect to the longitudinal direction in order to achieve the desired mechanical attributes. However, arranging the fibres in an angle of 5° to 60° with respect to the longitudinal direction has been observed to be particularly well suited for use in the composite construction according to the invention.

A composite construction for a tubular piece, according to a particular embodiment of the invention, comprises a first longitudinal section comprising two separate layers of longitudinal fibres, wherein the fibres of the separate layers differ from each other.

Preferably the first longitudinal section comprises carbon fibre. A first oriented section of the embodiment in question comprises two separate layers, wherein the fibres in said separate layers are arranged to be oriented in at least two separate angles with respect to the longitudinal direction of said tubular piece, preferably opposite to each other. Preferably the fibres of the first oriented section comprise synthetic fibre or natural fibre. A second section of longitudinal fibres comprises two separate layers of fibres, wherein the fibres in said separate layers differ from each other. Preferably, the fibres in the second longitudinal layer comprise carbon fibre. A second section of oriented fibres comprises two separate layers of longitudinal fibres, wherein the fibres in said separate layers are arranged to be oriented in at least two separate angles with respect to the longitudinal direction of said tubular piece, preferably opposite to each other. The composite construction according to the particular embodiment can additionally comprise a separate section of mutually crosswise braided fibres positioned between the first longitudinal section and the first oriented section. Alternatively, the first oriented section can be implemented as mutually crosswise braided fibres.

A composite construction for a tubular piece, according to a particular embodiment of the invention, comprises a first longitudinal section comprising two separate layers of longitudinal fibres, wherein the fibres of the separate layers differ from each other. Preferably the first longitudinal section comprises carbon fibre. A first oriented section of the embodiment in question comprises two separate layers, wherein the fibres in said separate layers are arranged to be oriented in at least two separate angles with respect to the longitudinal direction of said tubular piece, preferably opposite to each other. Preferably the fibres of the first oriented section comprise synthetic fibre or natural fibre. A second section of longitudinal fibres comprises two separate layers of fibres, wherein the fibres in said separate layers differ from each other. Preferably, the fibres in the second longitudinal layer comprise carbon fibre. A second section of oriented fibres comprises fibres of just one type. Preferably the fibres of the second section of oriented fibres comprise carbon fibre. The composite construction according to the particular embodiment can additionally comprise a separate section of mutually crosswise braided fibres positioned between the first longitudinal section and the first oriented section. Alternatively, the first oriented section can be implemented as mutually crosswise braided fibres.

A composite construction for a tubular piece, according to another particular embodiment of the invention, comprises a first longitudinal section comprising two separate layers of longitudinal fibres, wherein the fibres of the separate layers differ from each other. Preferably the first longitudinal section comprises carbon fibre. A first oriented section of the embodiment in question comprises two separate layers, wherein the fibres in said separate layers are arranged to be oriented in at least two separate angles with respect to the longitudinal direction of said tubular piece, preferably opposite to each other. Preferably the fibres of the first oriented section comprise synthetic fibre or natural fibre. A second section of longitudinal fibres comprises fibres of just one type. Preferably, the fibres in the second longitudinal section comprise carbon fibre. A second section of oriented fibres comprises two separate layers of longitudinal fibres, wherein the fibres in said separate layers are arranged to be oriented in at least two separate angles with respect to the longitudinal direction of said tubular piece, preferably opposite to each other. Preferably the fibres of the second section of oriented fibres comprise carbon fibre.

A composite construction for a tubular piece, according to still another particular embodiment of the invention, comprises a first longitudinal section comprising fibres of just one type. Preferably the first longitudinal section comprises carbon fibre. This section of fibres comprises two separate layers of longitudinal fibres, wherein the fibres in said separate layers differ from each other. A first oriented section of the embodiment in question comprises fibres of just one type. Preferably the fibres of the first oriented section comprise synthetic fibre or natural fibre. A second section of longitudinal fibres comprises fibres of just one type, preferably carbon fibre. A second section of oriented fibres comprises two separate layers of longitudinal fibres, wherein the fibres in said separate layers are arranged to be oriented in at least two separate angles with respect to the longitudinal direction of said tubular piece, preferably opposite to each other. Preferably the fibres of the second section of oriented fibres comprise carbon fibre.

A composite construction for a tubular piece, according to still one particular embodiment of the invention, comprises a first longitudinal section comprising fibres of just one type. Preferably the first longitudinal section comprises carbon fibre. A first oriented section of the embodiment in question comprises fibres of just one type. Preferably the fibres of the first oriented section comprise synthetic fibre or natural fibre. A second section of longitudinal fibres comprises fibres of just one type, preferably carbon fibre. A second section of oriented fibres comprises two separate layers of longitudinal fibres, wherein the fibres in said separate layers are arranged to be oriented in at least two separate angles with respect to the longitudinal direction of said tubular piece, preferably opposite to each other. Preferably the fibres of the second section of oriented fibres comprise carbon fibre. The composite construction according to the particular embodiment can additionally comprise a separate section of mutually crosswise braided fibres positioned between the first longitudinal section and the first oriented section. Alternatively, the first oriented section can be implemented as mutually crosswise braided fibres.

Most preferably, epoxy based resin is used as matrix material in the composite construction of the particular embodiments presented above.

Furthermore, most preferably, the natural fibre or synthetic fibre to be used in connection with the particular embodiments presented above is polyester fibre (PES).

In addition, when, in connection with the particular embodiments presented above, the same section comprises two separate layers, the fibres in which separate layers differ from each other, one of said separate layers preferably comprises high modulus (HM) or ultra-high modulus (UHM) carbon fibre. Correspondingly, the other one of said separate layers most preferably comprises ordinary (HR, HT, or HS) carbon fibre.

Naturally, the composite construction according to the present invention can be implemented such that a section of the composite construction comprises a plurality of separate layers more numerous than what is presented in the particular embodiments presented above.

## Claims

1. A composite construction for a tubular piece comprising a matrix material and reinforcing fibres, wherein at least some part of said reinforcing fibres comprises carbon fibre, said composite construction being divided into sections in the direction of the thickness of the tubular piece, the composite construction comprising:
- a first section of longitudinal fibres comprising essentially parallel continuous fibres arranged essentially longitudinally with respect to the tubular piece;
- a first section of oriented fibres comprising essentially continuous fibres, that are oriented in an angle with respect to the longitudinal direction of said tubular piece;
- a second section of longitudinal fibres comprising essentially parallel continuous fibres arranged essentially longitudinally with respect to the tubular piece, and
- a second section of oriented fibres comprising essentially continuous fibres, that are oriented in an angle with respect to the longitudinal direction of said tubular piece, wherein the first section of longitudinal fibres forms the inner surface of the tubular piece, the first section of oriented fibres is arranged between the first section of longitudinal fibres and the second section of longitudinal fibres, the second section of longitudinal fibres is arranged between the first section of oriented fibres and the second section of oriented fibres, and the second section of oriented fibres forms the outer surface of the tubular piece, wherein the fibres of said first oriented section, the fibres of the second longitudinal section, or both, comprise synthetic fibre, natural fibre, or both,
**characterized by**
the first oriented section, the second oriented section, or both, comprising mutually crosswise braided fibres, and/or
said tube structure additionally comprising a separate braided section arranged around the first longitudinal section, the second longitudinal section, or both, said braided section comprising essentially continuous, mutually crosswise braided fibres.

2. Composite construction according to claim 1, **characterized by** the first longitudinal section, the second longitudinal section, or both, comprising more than one separate layer of fibres, the fibres of the separate layers located immediately adjacent on top of each other in the longitudinal section being different from one another.

3. Composite construction according to claim 1 or 2, **characterized by** the first oriented section, the second oriented section, or both, comprising more than one separate layer of fibres, the fibres of the separate layers located immediately adjacent on top of each other in the oriented section being arranged to be oriented in at least two separate angles with respect to the longitudinal direction of said tubular piece.

4. Composite construction according to claim 3, **characterized by** said at least two angles being mutually opposite angles with respect to the longitudinal direction of said tubular piece.

5. Composite construction according to any one of the previous claims, **characterized by** the fibres of the first section of oriented fibres being oriented in an angle of, preferably, 10° to 90° with respect to the longitudinal direction of said tubular piece.

6. Composite construction according to claim 5, **characterized by** the fibres of the first section of oriented fibres being oriented in an angle of, preferably 10° to 40°, more preferably 15° to 35°, most preferably 20° to 30°, with respect to the longitudinal direction of said tubular piece.

7. Composite construction according to claim 5, **characterized by** the fibres of the first section of oriented fibres being oriented in an angle of, preferably 40° to 90°, more preferably 50° to 80°, most preferably 60° to 70°, with respect to the longitudinal direction of said tubular piece.

8. Composite construction according to any one of the previous claims, **characterized by** the fibres of the second section of oriented fibres being oriented in an angle of, preferably, 5° to 60° with respect to the longitudinal direction of said tubular piece.

9. A tubular piece, **characterised by** the tubular piece comprising a composite construction according to any one of the claims 1 to 8.

10. A method for manufacturing a tubular piece of composite construction by means of a pultrusion process, said composite construction being divided into sections in the direction of the thickness of the tubular piece, which method comprises steps, in which
- a first section of longitudinal fibres is being arranged by pulling essentially parallel continuous fibres essentially longitudinally with respect to the tubular piece;
- a first section of oriented fibres is being arranged by winding essentially continuous fibres in order to orient them in an angle with respect to the longitudinal direction of said tubular piece;
- a second section of longitudinal fibres is being arranged by pulling essentially parallel continuous fibres essentially longitudinally with respect to the tubular piece, and
- a second section of oriented fibres is being arranged by winding essentially continuous fibres in order to orient them in an angle with respect to the longitudinal direction of said tubular piece, wherein
the first section of longitudinal fibres forms the inner surface of the tubular piece, the first section of oriented fibres is being arranged between the first section of longitudinal fibres and the second section of longitudinal fibres, the second section of longitudinal fibres is being arranged between the first section of oriented fibres and the second section of oriented fibres, and the second section of oriented fibres forms the outer surface of the tubular piece, wherein the fibres of said first oriented section, the fibres of the second longitudinal section, or both, comprise synthetic fibre, natural fibre, or both, **characterized by**
the arranging of the first oriented section, the second oriented section, or both, comprising braiding essentially continuous fibres mutually crosswise, and/or
said method additionally comprising arranging a separate braided section around the first longitudinal section, the second longitudinal section, or both, the arranging of said braided section comprising braiding essentially continuous fibres mutually crosswise.

11. Method according to claim 10, **characterized by** the arranging of the first longitudinal section, the second longitudinal section, or both, comprising arranging more than one separate layer of fibres, the fibres of the separate layers located immediately adjacent on top of each other in the longitudinal section being different from one another.

12. Method according to claim 10 or 11, **characterized by** the arranging of the first oriented section, the second oriented section, or both, comprising arranging more than one separate layer of fibres, the fibres of the separate layers located immediately adjacent on top of each other in the oriented section being arranged to be oriented in at least two separate angles with respect to the longitudinal direction of said tubular piece.

13. Method according to any one of claims 10 to 12, **characterized by** the fibres of the layers located immediately adjacent on top of each other in the oriented section being arranged to be oriented in mutually opposite angles with respect to the longitudinal direction of the tubular piece.

14. Method according to any one of claims 10 to 13, **characterized by** the fibres of the first section of oriented fibres being arranged to be oriented in an angle of, preferably, 10° to 90° with respect to the longitudinal direction of said tubular piece.

15. Method according to claim 14, **characterized by** the fibres of the first section of oriented fibres being arranged to be oriented in an angle of, preferably 10° to 40°, more preferably 15° to 35°, most preferably 20° to 30°, with respect to the longitudinal direction of said tubular piece.

16. Method according to claim 14, **characterized by** the fibres of the first section of oriented fibres being arranged to be oriented in an angle of, preferably 40° to 90°, more preferably 50° to 80°, most preferably 60° to 70°, with respect to the longitudinal direction of said tubular piece.

17. Method according to any one of claims 10 to 14, **characterized by** the fibres of the second section of oriented fibres being oriented in an angle of, preferably, 5° to 60° with respect to the longitudinal direction of said tubular piece.
